# EUROPEAN PATENT SPECIFICATION

(11) **EP 3 212 047 B1**
(45) Date of publication and mention of the grant of the patent: **19.01.2022**
(21) Application number: 15791535.6
(22) Date of filing: 23.10.2015
(51) Int. Cl.: A47J 36/04, A21B 3/13

(54) **REINFORCED TRAY**
VERSTÄRKTE SCHALE
PLATEAU RENFORCÉ

(30) Priority: 28.10.2014 BE 201405032; 22.04.2015 BE 201505265
(43) Date of publication of application: 06.09.2017
(73) Proprietor: I.C.B. NV, 3271 Scherpenheuvel-Zichem (BE)
(72) Inventor: BERGEN, Johan, B-3271 Scherpenheuvel-Zichem (BE)
(74) Representative: Office Kirkpatrick
(86) International application number: PCT/EP2015/074650
(87) International publication number: WO 2016/066554

(56) References cited:
- FR-A5- 2 097 608
- GB-A- 2 154 860
- US-A- 1 979 924
- US-A- 2 395 794
- US-B1- 7 034 256

## Description

### Field of the invention

The invention relates to recipients of a foil with a non-stick coating and to cooking utensils comprising such recipients such as baking trays and tins in the production of pastry such as bread.

### Background of the invention

Glass fibres which are covered with an anti-stick coating offer several advantages when preparing food. Thus, an internal glass fibre matrix prevents a film which is made only of PFTE (polytetrafluoroethylene) from tearing. Glass fibre filaments may be covered or impregnated with a PTFE layer, so that food does not come into contact with the glass fibres.

Flat pre-cut glass-fibre films with Teflon are commercially known in the amateur kitchen. When they are inserted into a baking tin, these films form upon insertion the shape of a tray with a bottom and upright walls. There are also preformed trays made of glass fibre with a Teflon coating. After baking, the baking tin is turned over to remove the pastry. Usually, the film adheres to the pastry, so that additional manipulation is required to separate the film from the pastry. The fact that the film sometimes sticks and sometimes does not stick to the bread is inconvenient in industrial production lines for baking bread and other pastry.

There is therefore a further need for less expensive, cleaner and more efficient alternatives to remove a bread loaf from a baking tin.

Recipients of PTFE coating fibre glass, such as oven trays, consist of a foil with a thickness of less than 1 millimetre, so that heat transfer is ensured and there is optimum contact between food and tray, due to the flexibility.

This flexibility also has drawbacks:
With oven trays, the vertical edges will start to sag over the course of time, despite the fact that the corners of such trays usually offer some rigidity.

Due to the flexibility of a tray, it is sometimes difficult to remove the food from the tray.

When manipulating a tray, this tray does not provide a lot of support for the dish. There is a significant risk that part of the food runs out of the tray, the tray collapses or the food slides out of the tray.

The use of a relatively thick glass fibre or a relatively thick anti-stick coating does not provide a solution, because the heat transfer is hindered and the contact between food and tray decreases when a more rigid foil is used.

Baking tins for bread are typically sprayed with grease or are coated with a permanent layer of a non-stick coating such as PTFE to facilitate the removal of bread.

FR2097608 discloses baking trays for bread with an insert of a silicone rubber coated glass fibre net. The net has little structure and needs to be fixed to the bottom and the sides of a tray. The net is attached to the sides of the tray by folding the fibre around the tray and securing the rubber by a metal strip with screws. Special precautions should be taken to avoid that the screws pierce the tray and damage the content of the tray. Replacing the tray when the glass fibre net is worn-out is not convenient. GB2154860 A also discloses a recipient for preparing and/or heating food.

### Summary of the invention.

The present invention relates to a recipient for preparing and/or heating food, comprising a bottom (2) and vertical edges (3) made out of a foil of a woven heat-resistant material which is covered and/or impregnated with a heat-resistant, not electrically conductive anti-stick material, wherein near or at the top side of the vertical edges (3) of the foil of the recipient, along the entire periphery a reinforcing and heat-resistant rigid element (4) is permanently present, wherein the edge of the foil is folded outwards around said element (4) at the outside and extends to the bottom of the recipient (1) such that the foil covers the rigid element (4) and that a double layered side wall is formed on each vertical edge (3), and wherein the foil is welded together such that the element (4) is fastened to the glass fibre foil in a loop-shaped border (5) of the foil.

Small parts of the element will be visible in the corners.

The anti-stick material is usually PTFE.

The rigid heat-resistant element is usually made of metal, and in certain embodiments of a non-ferrous metal.

In certain embodiments, at least the bottom of the recipient is of a perforated foil or is of a woven or non-woven open fabric.

In certain embodiments, the rigid heat-resistant element is circular (with a diameter of, for example, 1 to 5 mm) or has an oval, square or polygonal shape, with, for example, a maximum diameter of 2 to 20 mm, in cross section.

In other embodiments, the rigid heat-resistant element has a length of between 10 and 30 mm and a width of between 0.1 and 3 mm in cross section.

The element is fastened to the edge of the tray by means of a loop-shaped border of the foil around the element.

Not part of the invention is when the element is fastened to the edge of the tray by a further foil strip which fits over the two edges of the tray and over the element in a U shape.

Not part of the invention is when the element is fastened to the edge of the tray by a further foil strip which fits around the element on one side of the edge.

The border or the strip is usually fastened by welding.

An aspect of the invention relates to combinations of a recipient as described above and an external support for the recipient, wherein the recipient is reversibly attached to the external support.

Embodiments of the invention relate to combinations (10) of baking tins for pastry such as bread and removable trays made from a foil with a non-stick coating, as defined in claims 6 to 9.

In certain embodiments, the recipient is a tray for holding dough and bread, wherein the external support is a frame with the contours of a bread tin, the frame comprising bars or plates providing support to the bottom and the side walls of the tray.

In typical embodiments, the pastry is a loaf of baked bread.

In typical combinations, the baking tin is made of metal (e.g. aluminium).

In typical combinations, the baking tin has two securing elements opposite each other on the width sides of the baking tin.

In other typical combinations, the baking tin has four securing elements, arranged in pairs opposite each other on the long sides of the baking tin.

In typical combinations, the securing element is a foldable lip which is attached to the outer side of the baking tin and, in use, interacts with the element.

In typical combinations or sets, the securing element is a foldable part of the baking tin which, in use, interacts with the element.

In typical combinations, the non-stick material of the tray is polytetrafluoroethylene (PTFE).

In typical combinations, the rigid heat-resistant element is made of metal.

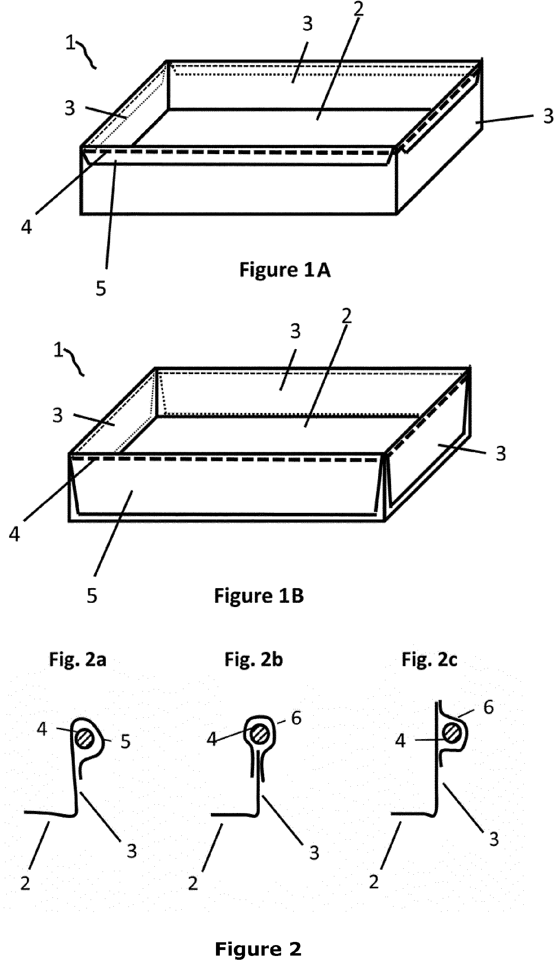

In typical combinations, the element is secured in the edge of the tray by a loop-shaped border (figure 2a) of the foil around the element.

What is not part of the invention is that the element is secured to the edge of the tray by a further foil strip (figure 2b) which fits as a U shape over both edges of the tray and over the element.

What is not part of the invention is that the element is secured to the edge of the tray by a further foil strip (figure 2c) which fits around the element on one side of the edge. The border or the further strip is usually secured by welding.

The invention allows removing pastry, such as a loaf of baked bread, from a baking tin by
- providing a combination of a baking tin (8) and a tray (1) as described above, in which the tray contains pastry, and in which the tray is removably secured in the baking tin,
- exerting a mechanical force on the portion of the pastry which protrudes from the tray, as a result of which the pastry is removed from the tray and the tray remains behind in the baking tin.

The mechanical force may be exerted by a vacuum from one or more movable suction cups.

Another aspect of the invention relates to the use of a combination or set as described above to remove pastry, such as a loaf of baked bread, from a baking tin with the tray remaining in the baking tin.

Another aspect of the invention relates to the combination of a tray and a baking tin (8) with securing elements (81) to removably secure the tray (1) with a foil with a non-stick layer and a reinforcing element at the top side, around the periphery of the tray, in the baking tin.

The use of a tray of the present invention in combination with a baking tin has specific advantages compared to conventional baking tins.

Indeed in industrial bakeries, baked bread is mechanically removed from a metal baking tin. Usually, this is carried out by means of a vacuum which is applied to the top side of a bread loaf, resulting in the bread loaf being lifted up and removed from the baking tin. Various independently movable suction cups adapt to the shape of the bread loaf. These devices with suction cups are known as "depanners" and are commercially available from e.g. Capway (Netherlands), Gemini (USA) and Newsmith (UK). Examples thereof are described in US3877592, US3587891, GB1171194 and US3325025.

It is important to prevent damage to the bread loaf when it is being removed from the baking tin. This is achieved in two ways in the prior art.

With the first procedure, the inside of a baking tin is sprayed with oil before use. This requires significant amounts of fat. In addition, part of the oil ends up outside the tin when it is being sprayed, thus soiling the workplace. Also, dough subsequently comes into contact with the oil in the baking tin, which is not always desirable.

With the second procedure, baking tins with a permanent Teflon (PTFE) coating on the inside are used. This Teflon layer is subject to wear or may become damaged, so that the baking tin has to be recoated or the baking tin has to be replaced in its entirety. Both options are expensive.

The use of the baking tins with trays of the present invention overcomes these problems.

The present invention makes it possible to use baking tins which do not require the use of oil or fat, as a result of which it is possible to work more cleanly and the crust of the bread does not contain any oil.

The present invention makes it possible to use baking tins without a permanent Teflon coating and the tray with the foil is therefore only replaced when the foil contained therein is worn, damaged or dirty.

### Figures

**Figure 1** shows an embodiment of a tray-shaped food tray (1) with a flat bottom (2) and vertical edges (3). A metal bar (dashed line)(4) is arranged in a border (5) of the edge of the tray, around the entire periphery of the tray. Figure 1A is not part of the invention.
**Figure 2** shows some variants of attaching a bar on the edge of a tray: a) Border (5) of the edge around the bar, b) additional U-shaped foil strip (6) around the edge and the bar, c) additional foil strip (6) on one side of the vertical edge. Figures 2b and 2c are not part of the invention.
**Figure 3** shows embodiments wherein handles for manipulation are provided. **Fig. 3a** shows an ear shape handle (7) which is attached to the reinforcing element.
**Fig. 3b** shows a handle which is a part of an external frame, that extends under the tray. In **Fig. 3c** the frame fits around the side walls of the trays.

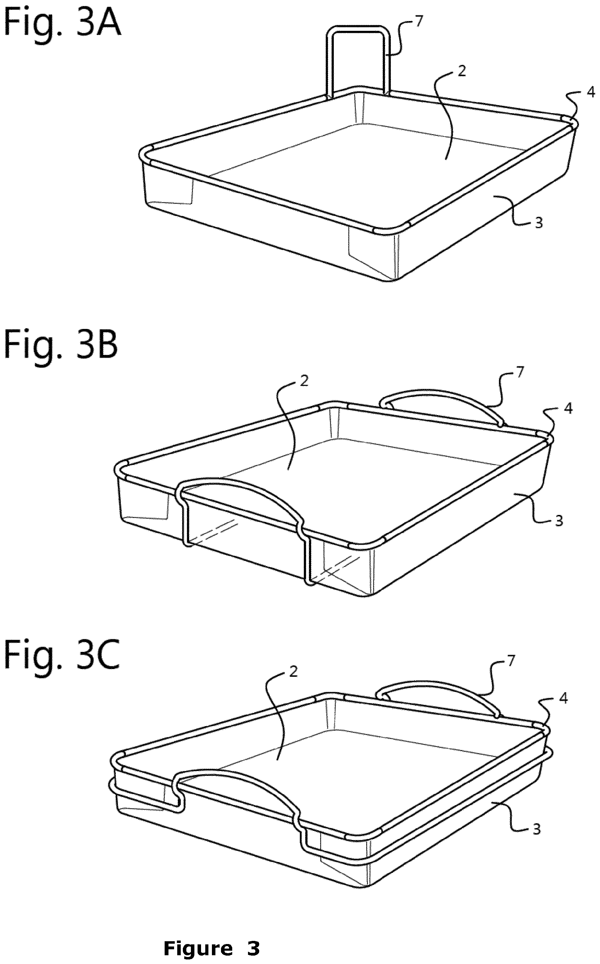

   In figure 3b and 3c, the frame has a bulge at the height of the reinforcing element which allows a tight attachment of the tray in the frame. The frame itself provides a further physical support to the tray.

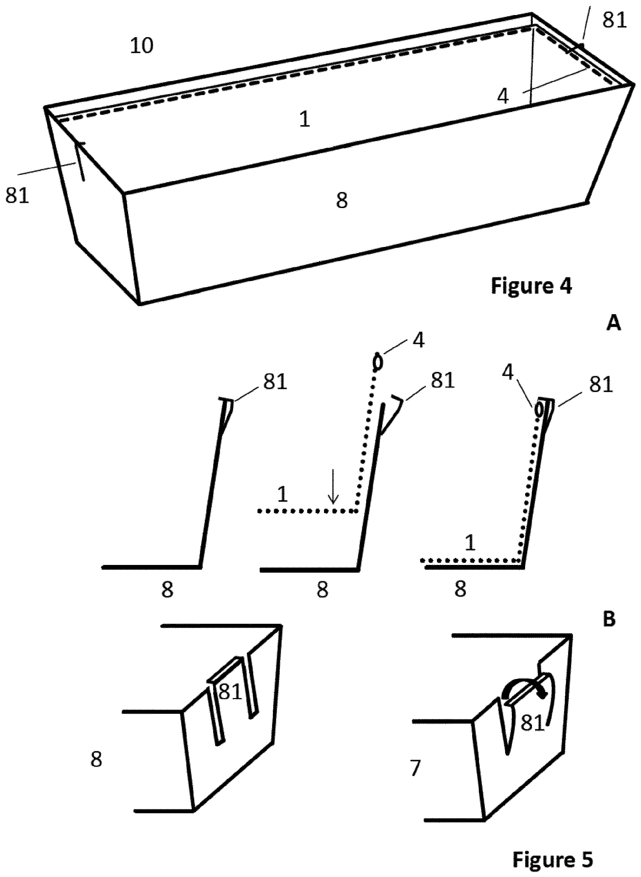

**Figure 4** shows a diagrammatic representation of a combination (10) of a baking tin (8) with a tray (1) and two securing elements (81) on the short sides of the baking tin, in which the height of the tray is smaller than the height of the baking tin. The element (4) which is contained in the border of the edge of the trays is denoted by a dashed line. (border not shown)
**Figure 5** (partial cross section at the location of element (81) shows diagrammatic representations of securing elements (81) for inserting a tray (1) into a baking tin (8).
**Fig. 5A****:** The element (81) is a foldable lip which protrudes inwards over the edge of the baking tin (8) (left). When the lip is pulled outwards, the tray can be introduced into the baking tin (centre). When the tray is situated in the baking tin, the lip is positioned on the element (4) and the tray is held securely in the baking tin.
**Fig 5B****:** diagrammatic representation of a baking tin (8) with a cut side with a folded top (left). The cut part (81) of the baking tin can temporarily be bent outwards to enable a tray to be fitted in the baking tin (right).

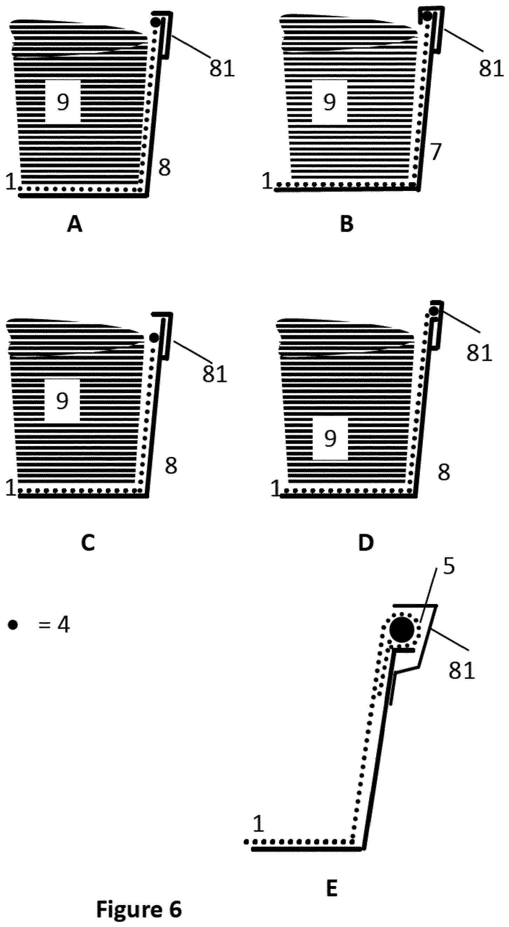

**Figure 6** shows a number of embodiments of trays (3) and securing means (21) (partial cross section at the location of element 21).
**Fig. 6A** shows a securing element which rests on the edge of the tray.
**Fig. 6B** shows a securing element which is folded around the edge of the tray.
**Fig. 6C** shows a securing element which is situated above the edge of the tray, but does not touch it. During removal of the bread loaf and the accompanying upward movement, the tray is detained by the element.
**Fig. 6D** (and detail in **Fig. 6E**) shows an embodiment in which the element (4) is situated in the border (5) of the foil on the outer side of the tray (cf. Fig. 2a). The element is thus situated between the folded edge of the baking tin and the securing element.

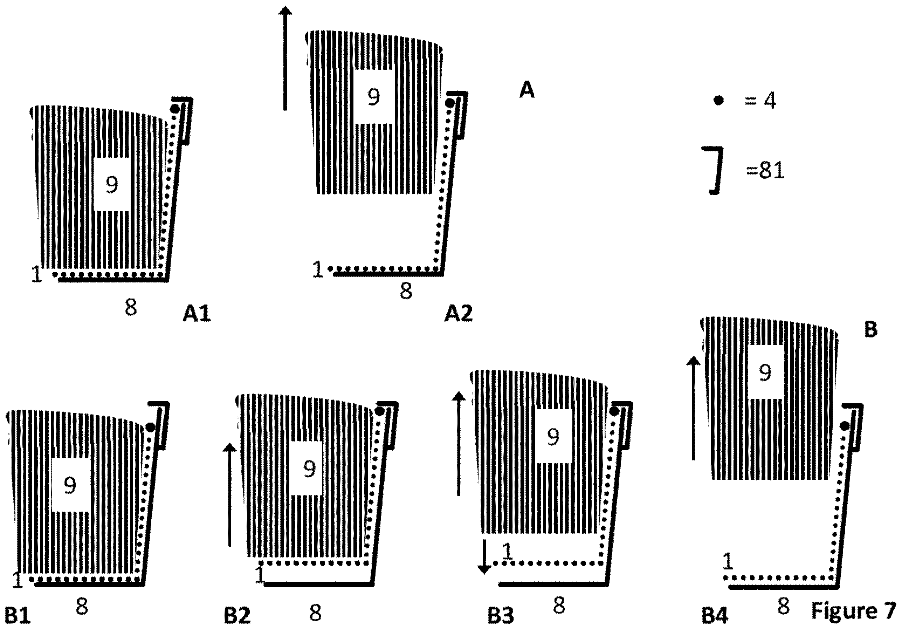

**Figure 7** shows a diagrammatic representation for removing a bread loaf (9) from a baking tin (8). (partial cross section at the location of element (81)).
**Fig. 7A:** in this embodiment, the tray (1) is clamped in the baking tin (8) by the securing element (81) which rests on the element (4) of the tray (1) (A1). When the bread loaf (9) is lifted up (A2), the tray is prevented from moving and the tray remains in the baking tin.
**Fig. 7B:** in this embodiment, the element (81) does not touch the tray (1) (B1). When the bread loaf (9) is lifted up, the tray can move concomitantly upwards until the element (4) touches the element (B2). From then on, the bread loaf moves further upwards and detaches from the tray, with the tray dropping back down (B3). The bread loaf is lifted up further, whereas the tray remains behind in the baking tin (B4).

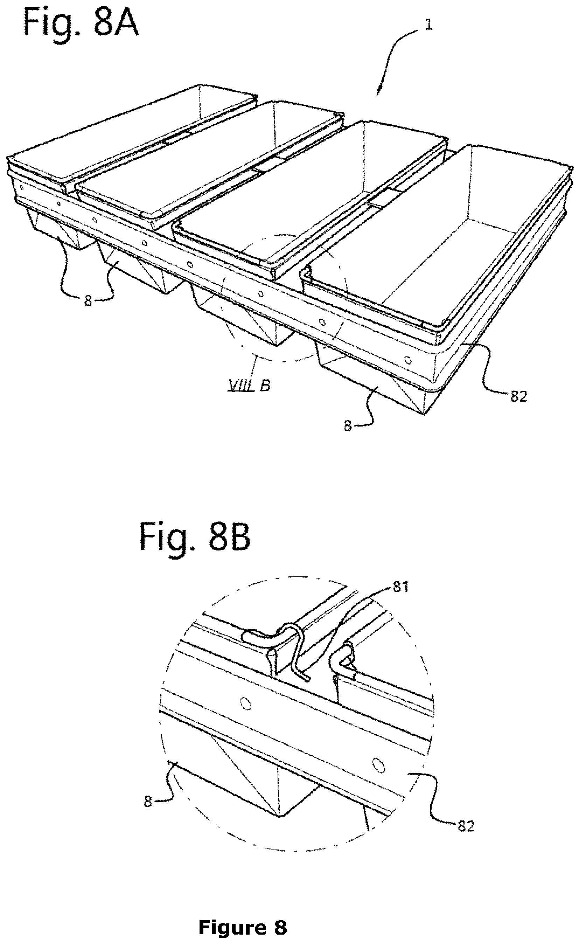

**Figure 8** shows an example of an assembly of different trays which fit in conventional tins.
**Fig. 8A** shows four tins which are assembled together in a metal frame (82). This frame allows the manipulation of the tins on an automatic line for filling, baking and depanning.
**Fig. 8B** shows a detail of a tray and a tin, wherein the securing element (81) is a hook which attaches the tray to the tin. The hook fits at one end between the foil and the tin, such that the hook does not scratch the bread upon removal.

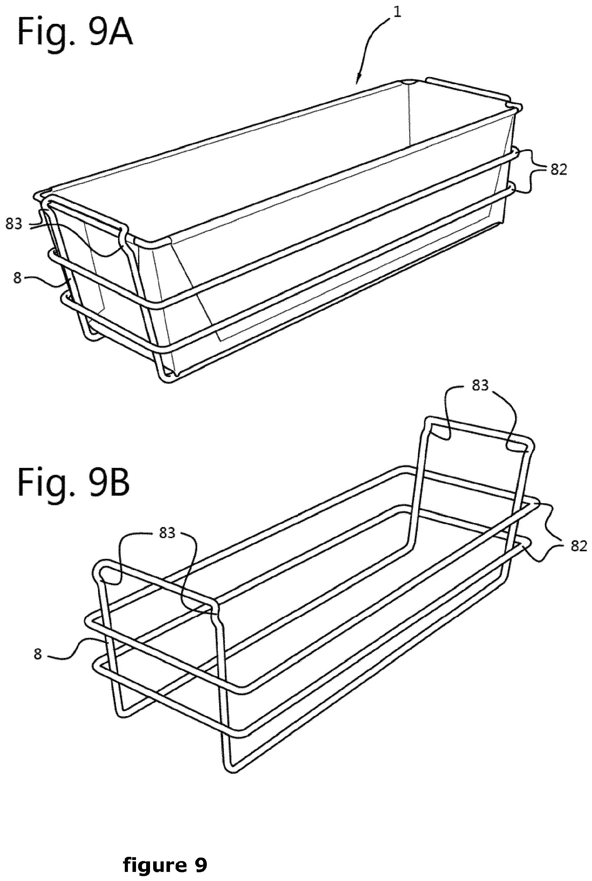

**Figure 9** shows an embodiment for an alternative of the combination of one tray and a tin (figure 9A). Since the tray provides significant support to the dough and bread, the tin can be replaced by a frame wherein the tray is clamped in the frame via bulges (83). Figure 9B shows the frame without tray.

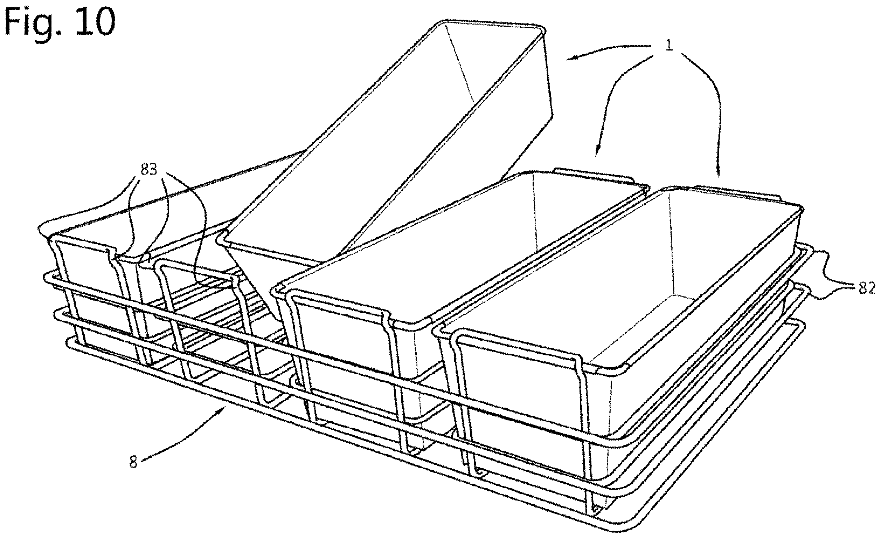

**Figure 10** shows an embodiment for an alternative of the combination of 4 trays and 4 tins in an assembly as shown in figure 8. Bars (82) equally allow the manipulation of the assembly in industrial bakeries.

### Detailed description

The present invention provides food recipient ("trays") which are more sturdy than those of the prior art and can be handled more securely.

"Top (side)/upper side", "bottom (side)/lower side", "side/upright wall" refer to trays, tins and the like in the position they are in when they are being filled with food or used during heating or baking.

The food recipients have a bottom and vertical edges made from a heat-resistant woven material which is covered and/or impregnated with a heat-resistant, not electrically conductive anti-stick material. These coated and/or impregnated woven materials will be referred to in the present invention as "film or foil". Heat-resistant means physically and chemically stable at the temperatures of a bread oven (150-300 °C), or of a pan for frying e.g. French fries (160-200 °C). According to the invention, the woven material is a glass fibre fabric. Materials such as aramid (Kevlar TM) or having similar properties may also be taken into consideration.

The anti-stick material is typically polytetrafluoroethylene (PTFE), known as Teflon^{™}, or another heat-resistant material having a low coefficient of friction, such as fluorinated ethylene propylene (FEP) or perfluoroalkoxy (PFA). Glass fibre-reinforced Teflon (PTFE (polytetrafluoroethylene)), for example, is commercially available in different thicknesses.

The films or foils typically have a thickness of between 0.05 and 1 mm, or 0.1 to 0.5 mm. Alternative types of foil have a thickness with a lower limit of 0.05, 0.1, or 0.2 mm and an upper limit of 0.3, 0.4, 0.5, 0.75 or 1 mm. This offers the desired compromise between mechanical strength and thermal conduction.

The foil which is used for the trays is essentially flat, although the structure of the glass fibre in the foil is visible and sensible. A degree of structure is permissible, as long as it does not hamper the removal of at its content after preparation or heating. For example for a bread loaf, vertical ridges in the foil could be tolerated, but horizontal ridges less so.

In embodiments wherein the trays are used in a baking tin the film is not porous and is impermeable to water.

These foils typically have a thickness of between 0.05 and 0.5 mm, depending on the desired load-bearing capacity, and the intended type of food which is to be prepared. The trays of the present invention have a bottom and vertical edges and have the appearance of a tray, and will be referred to as "tray" in the remainder of the description. Such trays may be round or oval, or square, rectangular or polygonal. In certain embodiments, the bottom is not completely flat, but curved. Also, the vertical edges do not have to be at right angles to the bottom.

In its simplest form, the tray is made from a piece of foil which is folded to form the desired shape and is fastened by welding or stitching.

These trays are used for, for example, pastry, pasta dishes, heating small snacks, etc.

The trays of the present invention are used in standard ovens or on barbecues and have a bottom with a surface area of between 25 to 1000 cm². The vertical edge may have a height of between 1 and 10 cm.

For the preparation of bread, the tray is dimensioned such that it fits into a matching baking tin. Trays usually have a rectangular top and bottom side when they are being used in a baking tin, although a square bottom and top side are also possible when using square baking tins. Generally, for use in baking tins the upper surface area is greater than the base surface area, so that the tray tapers downwards so as to fit the walls of a conventional baking tin in an optimum manner.

Depending on the application, the foil may be impermeable to water, if loss of moisture is undesired. In other applications, the foil is perforated in order, for example, to dispose of fat when baking fries in an oven. The size and number of perforations may be chosen as a function of the size of the food to be prepared and the amount of liquid which is released during cooking. Perforations can also be provided by using an open woven or non-woven fabric. Typically this a woven mesh of glass fibre strips with a width of 1 to 5 or up to 10 mm or more , and holes with a square, rectangular or hexagonal openings with a diameter of between 1 and 5 and 10 mm or even more, depending on the size of the food article .

Depending on the application, the porosity of the tray can differ at different parts of the tray (e.g. only at the bottom to allow draining of a liquid).

The reinforcement of the recipient is in first instance and in all embodiments achieved by fitting a rigid heat-resistant element near the top side of the vertical edge of the tray.

This is achieved by providing a reinforcing element near the top side of the vertical edge of the upright walls and along the entire periphery of the tray, which, on the one hand, provides sufficient rigidity and, on the other hand, is able to withstand high temperatures (e.g. oven, barbecue). The reinforcement is usually a rust-resistant metal bar, plate or cable. This may be a ferrous or non-ferrous material. Heat-resistant plastics, such as for example PEEK (Polyether ether ketone), are also suitable. The "reinforcing element" (typically a rod or stick) provides strength to the tray and can also used to hold the tray in e.g. a rack or a baking tin.

In typical embodiments, the ends of the element are attached to each other (for example welded).

In order to produce and use the trays as described in the invention, it is sufficient if the rigid element is arranged near the edge of the tray. Fastening may be effected in a variety of ways.

According to the invention, the element is positioned at a suitable distance from the edge of the foil, after which the edge of the foil is folded around the rigid element and the foil is welded together. In this way, the rigid element is fastened to the glass fibre in a loop shape (see Figs 1b and 2a). Typically, it is ensured that the element is situated on the outer side of the baking tin and the foil is folded outwards, such that the element is contained in the loop of the foil.

In an alternative which is not part of the invention, the element may be fastened by fitting a foil strip over the edge of the tray and the element in a U shape (see Fig. 2b). This U-shaped strip may be made of the same material as the tray, but may also be made from another material which may be fastened to the foil of the tray, is heat-resistant and has sufficient mechanical strength.

In another variant (see Fig. 2c) which is not part of the invention, the strip is fitted over the element and on only one side of the tray (usually the outer side). The strip is fastened to the foil on both sides of the element.

"Pastry" in the context of the present invention relates to baked items, such as cake and in particular to bread. Baked pastry has a defined shape and is fairly rigid, in contrast to dough which has an undefined and flexible shape. Also, the pastry in the context of the invention is pastry which comes into contact with the side walls of a baking tin and thus differs from e.g. round artisan loaves, croissants or rolls ("pistolets/ petits pains") which only come into contact with the bottom of a baking tray.

According to the invention, the foil is folded around the element at the outside extents to the bottom of the tray, such that a double layered side wall is obtained which gives additional strength and further prevents sagging of the tray.

Trays as discussed above have their use as stand-alone trays for heating in ovens. Further applications are however possible. For example the use of two trays, wherein one tray has a circumference which is slightly smaller than the other and wherein the smaller one is inserted upside down in the large one, results is a closed environment from which steam can nevertheless still escape, providing a non-stick alternative for e.g. an aluminium foil papillotte or a dim sung basket.

Also, the trays are particularly suitable as inserts in existing cooking devices wherein non-stick coating is desired. The reinforced element (typically a metal rod) is suitable for clamping or attaching the tray in a frame or rack. In other embodiments the tray has handles on the reinforced elements which facilitate the manipulation of a tray. The handles can be permanently attached to the reinforced element by welding. Alternatively the handles are attached via loops or hooks at the ends such that the handles can be moved upwards when needed.

In yet other embodiments, metal frames are used which give support to the bottom of a tray and allow the manipulation of the tray by the handles. A curve in the frame at the place of the reinforced element allows to clamp the tray in the frame. Examples hereof are shown in Figure 3.

Another application is the frying of fries, fish sticks and other items which are typically heated in oil.

Embodiments of the present invention provide assemblies of a tray with pores or preferably a tray with a foil of an open structure wherein a handle is attached to the reinforcing element for manipulation in and out a deep-frying pan with oil. Such trays have a lower weight than conventional metal baskets. Further, small food particles will not stick to the material of the tray and this in contrast to metal trays.

Another application is the use of trays with pores or an open structure for the frying of fries and snacks in a hot-air oven. These items are typically precooked and already contain sufficient grease, such that submersion in oil is not necessary. When trays are placed on a grid in an oven, or suspended in a rack, grease can leak out of the tray. In addition, when a hot air oven is used, circulating hot air can reach the food articles via the pores or open structure.

Accordingly another aspect of the present invention is an assembly of a tray and an external support. Specific embodiments hereof relate to assemblies for baking bread. Trays, as used in the baking tins of the present invention, are essentially closed, that is to say that the part of the foil of the tray with which the dough or the bread loaf comes into contact has a minimum of pores, holes or gaps. More particularly, the foil is attached to the four upright ribs, so that no gaps are present there.

As a result thereof, dough cannot creep into these pores and the like, so that the bread loaf is not damaged when it is removed from tin. In practice, there will usually be a small hole in the four corners at the bottom of the baking tin. This is typical of a tin which is made from a flat sheet. However, these small holes do not affect the removal of a bread loaf from this baking tin.

The securely welded upright ribs provide sufficient support to the tray, so that it cannot collapse when there is no dough or bread loaf in the baking tin or fold over when the bread loaf is removed.

A "baking tin" for use with the present invention usually has a rectangular shape at the top and bottom side for baking elongate bread loaves. Existing closed baking tins without holes in the bottom or side can be used, provided that the baking tins are provided with a clamp or another securing element to removably secure a tray in the baking tin. After all, the object is to be able to replace the tray when the foil of the tray is worn, damaged or very dirty.

Since the dough is introduced into a tray which determines the shape of the bread loaf, it is possible for the baking tin to have openings in the bottom and/or side in specific embodiments. Such openings may form part of the mechanical securing of the tray in the baking tin. An example thereof is given in the description below and in Fig. 4B. In specific embodiments, baking tins having one or more holes or even a baking tin having sides and/or bottom sides made from a metal grate are provided (see figure 9 and 10 for an example). The combination of such a baking tin with the tray provides sufficient mechanical support to the dough or the bread loaf.

In other embodiments, openings are provided in the four corners at the bottom of the baking tin. As a result thereof, the corners at the bottom of a tray may protrude from the baking tin, so that the side walls and the bottom of the tray adapt to those of the baking tin in an optimum manner.

When using closed baking tins, it is also possible to use tins which are thinner than the conventional tins.

Metal baking tins are most widely known and are used most often. Rigid baking tins made from composite material may also be used. These are commercially available from, for example, Clean Baking Products Belgie, Zwijndrecht, Belgium).

By producing the trays in which the upright walls are folded back around the element, there are parts of the element in the corners of the tray which are not covered by foil. It is possible to arrange the securing elements (84) in the corners of the baking tin, so that the elements do not damage the foil of the tray. If the securing means are not, or not solely, arranged in the corners, it is also possible to provide recesses at other locations in the border of the foil in order to prevent the foil from becoming damaged by the elements of the baking tin. Usually, the foil is sufficiently strong and the tray is only removed from the baking tin sporadically, so therefore no recesses are provided in the foil at those locations where the tray comes into contact with the securing elements in typical embodiments.

The trays with the reinforcement and the element are already preformed, in contrast to a number of prior-art baking tins which consist of a flat piece of foil which is cut out and comprises folds, so that the shape is only produced when the foil is introduced into the baking tin.

The baking tins and matching trays which fit the baking tin are removably secured to each other in a mechanical way. In fact, a mechanical securing arrangement is provided in the baking tin for the tray, so that the tray remains in the baking tin when a loaf of baked bread is removed from the baking tin with the tray. This prevents the loaf of baked bread from being removed together with the tray. The securing arrangement is removable, so that a tray can be replaced in case of wear, damage or significant soiling, whereas the baking tin can be re-used. With the methods of the present invention, it is not necessary to remove the tray after each baking operation. After the loaf of bread has been removed, the baking tin with the tray which is secured therein may optionally be cleaned and then be filled again with dough.

For the purpose of mechanical attachment, the tray and baking tin contain elements which make removable mechanical attachment possible.

As a result of the presence of the reinforcing element around the edge of the tray, it is sufficient to provide securing means at a limited number of positions on the baking tin in order to secure the tray in the baking tin, and to ensure that the tray is not removed from the tin when the bread loaf is being lifted out.

Two elements, one on each of the short sides of the baking tin, may already suffice to retain the tray via the element.

In alternative embodiments, several elements (4, 6, 8 or more) are used which are provided on the short and/or long sides of the baking tin (e.g. one element on each of the four sides; two elements on the two long sides; one element on both short sides and two elements on the two long sides, one element in each corner and two elements on the two long sides).

Various types of element may be devised, as long as they keep the tray in the baking tin when a loaf of baked bread is lifted from the tray.

Fig. 4b shows an example of a baking tin in which two vertical cuts are present on the narrow side and the baking tin is folded inwards on the top side, between the two cuts. The resulting lip may be pulled outwards when a tray is to be inserted in or removed from the baking tin.

The elements of the baking tin may closely adjoin, and even clamp, the element of the tray. As a result thereof, there is no movement of the tray with respect to the baking tin when the bread loaf is being lifted up.

Alternatively, the element on the baking tin may be arranged in such a manner that the element does not come into contact with the element of the tray, but does retain the tray when the bread loaf is being lifted up. When the tray touches the element during the upward movement, this will be accompanied by a small shock, so that the bread loaf can come off the foil more easily.

This configuration, in which the element is not held during filling with dough and during baking of the bread, has the advantage that the height of the upright walls of the tray is less critical and the tray will adjoin the baking tin in an optimum manner.

The elements are not allowed to protrude too far over the element in the direction of the bread loaf so as to prevent the bread loaf from scraping against the elements during removal. Examples are a foldable lip with a folded top side which fits around the element of the tray or rests on top of the element. Baking tins (and the matching tray) usually have slanting side walls, so that the surface area of the bottom side of the baking tin is smaller than the top side. This also reduces the risk of a bread loaf scraping against an element and makes the design of the elements less critical.

Figs 6D and 6E (detail) show an embodiment in which the top edge of the baking tin is folded outwards. The element of the tray is attached to the outer side of the foil (such as e.g. shown in Fig. 2a), so that the element comes to lie on top of the folded-over edge of the baking tin. The element which is attached to the baking tin rests on top of the element and clamps the element between the edge of the baking tin and the element. In this configuration, damage to the bread loaf during removal thereof is impossible.

The tins which are used with methods of the present invention are typically individual tins for preparing one single bread loaf. In the industrial processing of bread, such tins are often handled together, for example by placing various individual tins in a frame. It is also possible to attach various baking tins to one another or to provide various countersunk parts in one plate, so that various individual loaves can be baked in one tin. Such batch-baking tins may also be used with the methods of the present invention, in which case several individual trays are used and the batch-baking tin is provided with the necessary elements to removably secure the individual trays in a mechanical way.

When lifting up the bread, the weight of the baking tin and the limited friction with the Teflon layer on the outer side of the tray ensures that the baking tin is not lifted up concomitantly with the bread. If desired or required, the baking tin itself may be retained when the bread is being removed.

In the industrial production of bread, a vacuum is usually applied, as this causes least damage to the crust of the bread. The bread loaf may also be removed by other mechanical means, such as piercers, forks or grippers.

If desired, the pastry may also be removed by hand. This is usually done in cases where the number of loaves is relatively small.

Figure 8 shows an assembly wherein trays are inserted in prior art aluminium racks with four baking tins. In prior art uses the tins are sprayed with grease to prevent adhesion of the bread to the tin.

In an embodiment of the present invention, a tray is reversibly clamped into a tin by a resilient hook. Hereafter the baking process and manipulation of the bread can be performed in the same way as previously. This method makes the use of grease redundant. Since the tray is attached by the hook into the tin, the tray will remain in the tin when the bread is removed from the tin typically with a vacuum depanner.

The above assembly has the advantage that existing metal racks can be further used, while avoiding the use of grease or oil.

In an alternative assembly the solid tins are replaced by racks with a frame of solid metal wires as shown in figure 9 and 10, for receiving one or more trays. Alternatively, the frame is made of rods or plates.

While the prior art use required solid metal rectangular trays for retaining the dough, the dough is now kept in shape by the tray whereas the frame are mainly for manipulating the trays in industrial bakeries.

### Example 1

A rectangular glass fibre sheet covered with teflon of 38 x 28 cm, having a thickness of 0.2 mm, is cut at the corners and folded to obtain a rectangular tray having a bottom of 18 x 28 cm and vertical edges of 5 cm. These vertical edges are folded outwards. An aluminium bar with a diameter of 2 mm is folded into a rectangle of 18 x 28 cm in such a way that this folded wire fits into the border of the foil (optionally, the two ends of the metal bar are welded to each other). The folded-over edge of the foil is welded to the tray.

### Example 2. Aluminium baking tin with a Teflon-coated glass fibre tray

A rectangular sheet of Teflon-coated glass fibre having a thickness of 0.25 mm is cut and folded in the four corners in such a manner that a rectangular tray having a bottom and upright walls is obtained.

At the top, the upright walls of the tray are folded over outwards. A chromed metal element with a diameter of 3 mm is folded to form a rectangle (30.5 x 11 cm) and the ends of the metal element are welded to each other. This element is arranged in the border of the upright walls and the folded-over edge of the foil is welded to the tray.

The tray measures 29.5 × 10 cm at the top, 28.5 × 9 cm at the bottom and its height is 9 cm. On the outer sides of the tray, the metal edge projects 4 to 5 mm.

The matching baking tin measures 29.5 × 10 cm at the top, 28.5 × 9 cm at the bottom and its height is 8.5 cm. In the middle of the two short sides of the baking tin, there is a metal lip at the top which has a width of 1 cm and which is riveted to the outer side of the baking tin. The lip projects inwards by 5 mm over the edge of the baking tin.

The metal lip-shaped foldable element is pulled outwards and the tray is introduced into the baking tin. When the lip is released, this results in the tray being retained in the baking tin.

As a result thereof, the tray fits in the aluminium baking tin, in which case the tray protrudes a few millimetres beyond the edge of the baking tin and the element comes to lie between the edge of the baking tin and the lip, as is illustrated in Figs 6D and 6E.

An 800g portion of bread dough is placed in the tray in. During filling of the tray with dough, the bottom and the walls of the tray are pushed further into the baking tin, thus ensuring optimum heat transfer from the oven to the bread loaf. The bread loaf is baked under normal conditions (35 to 45 min at 230 to 250 °C).

After cooling, the bread loaf is pulled out of the tin by hand. No remains of the bread are found in the baking tin and the crust of the bread loaf is not damaged. The baking tin with tray can be used again. Between two baking operations, the tray does not have to be removed from the baking tin.

## Claims

1. A recipient (1) for preparing and/or heating food, comprising a bottom (2) and vertical edges (3) made out of a foil of a woven heat-resistant glass fibre material which is covered and/or impregnated with a heat-resistant, not electrically conductive anti-stick material, wherein near or at the top side of the vertical edges (3) of the foil of the recipient (1), along the entire periphery a reinforcing and heat-resistant rigid element (4) is permanently present, wherein the edge of the foil is folded outwards around said element (4) at the outside and extends to the bottom of the recipient (1) such that the foil covers the rigid element (4) and that a double layered side wall is formed on each vertical edge (3), and wherein the foil is welded together such that the element (4) is fastened to the glass fibre foil in a loop-shaped border (5) of the foil.

2. The recipient (1) according to claim 1, wherein the anti-stick material is polytetrafluoroethylene (PTFE).

3. The recipient (1) according to claim 1 or 2, wherein the rigid heat-resistant element (4) is made of metal or wherein the rigid heat-resistant element (4) is made of a non-ferrous metal.

4. The recipient (1) according to any of claims 1 to 3, wherein at least the bottom of the recipient is of a perforated foil or is of a woven or non-woven open fabric.

5. The recipient (1) according to any of claims 1 to 3, in which the foil is impermeable to water.

6. A combination of a recipient (1) according to any of the claims 1 to 5 and an external support, wherein the recipient (1) is for reversibly attaching to the external support, and wherein the recipient is a tray, and the external support is a baking tin or a frame comprising bars or plates providing support to the bottom and the side walls of the tray.

7. The combination according to claim 6, wherein the tray is reversibly attached via securing elements (81) on the tray which removably secure the tray in the baking tin via the element, so that the tray remains in the baking tin when removing pastry from this combination.

8. The combination of claim 6, in which the securing element is a foldable lip (81) which is attached to the outer side of the baking tin and, in use, interacts with the element (4).

9. The combination of claim 6, in which the securing element is a foldable part of the baking tin which, in use, interacts with the element.

## Patentansprüche

1. Behälter (1) zum Zubereiten und/oder Erwärmen von Speisen, umfassend einen Boden (2) und vertikale Ränder (3), die aus einer Folie eines gewebten wärmebeständigen Glasfasermaterials hergestellt sind, das mit einem wärmebeständigen, nicht elektrisch leitfähigen Antihaftmaterial bedeckt und/oder imprägniert ist, wobei nahe bei oder an der Oberseite der vertikalen Ränder (3) der Folie des Behälters (1), entlang des gesamten Umfangs ein verstärkendes und wärmebeständiges starres Element (4) permanent vorhanden ist, wobei der Rand der Folie nach außen um das genannte Element (4) an der Außenseite gefaltet ist und sich zum Boden des Behälters (1) derart erstreckt, dass die Folie das starre Element (4) bedeckt, und dass eine doppelschichtige Seitenwand an jedem vertikalen Rand (3) gebildet wird, und wobei die Folie derart verschweißt ist, dass das Element (4) an der Glasfaserfolie in einer schleifenförmigen Kante (5) der Folie befestigt ist.

2. Behälter (1) nach Anspruch 1, wobei das Antihaftmaterial Polytetrafluorethylen (PTFE) ist.

3. Behälter (1) nach Anspruch 1 oder 2, wobei das starre wärmebeständige Element (4) aus Metall hergestellt ist, oder wobei das starre wärmebeständige Element (4) aus einem nicht eisenhaltigen Material hergestellt ist.

4. Behälter (1) nach einem der Ansprüche 1 bis 3, wobei mindestens der Boden des Behälters aus einer perforierten Folie besteht oder aus einem gewebten oder nicht gewebten offenen Stoff besteht.

5. Behälter (1) nach einem der Ansprüche 1 bis 3, wobei die Folie wasserundurchlässig ist.

6. Kombination eines Behälters (1) nach einem der Ansprüche 1 bis 5 und eines externen Trägers, wobei der Behälter (1) zum reversiblen Anbringen an dem externen Träger dient, und wobei der Behälter eine Schale ist, und der externe Träger eine Backform oder ein Rahmen ist, umfassend Stäbe oder Platten, die eine Stütze für den Boden und die Seitenwände der Schale bereitstellen.

7. Kombination nach Anspruch 6, wobei die Schale reversibel über Befestigungselemente (81) an der Schale angebracht ist, die die Schale entfernbar in der Backform über das Element befestigen, so dass die Schale in der Backform bleibt, wenn Backwaren aus dieser Kombination entfernt werden.

8. Kombination nach Anspruch 6, wobei das Befestigungselement eine faltbare Lippe (81) ist, die an der Außenseite der Backform angebracht ist und im Gebrauch mit dem Element (4) interagiert.

9. Kombination nach Anspruch 6, wobei das Befestigungselement ein faltbarer Teil der Backform ist, der im Gebrauch mit dem Element interagiert.

## Revendications

1. Récipient (1) pour préparer et/ou chauffer de la nourriture, comprenant un fond (2) et des bords verticaux (3) faits d'une feuille d'une matière tissée de fibre de verre résistant à la chaleur qui est recouverte et/ou imprégnée d'une matière anti-adhérente résistant à la chaleur, non électriquement conductrice, dans lequel près ou au niveau du côté supérieur des bords verticaux (3) de la feuille du récipient (1), le long de la périphérie entière un élément de renforcement rigide et résistant à la chaleur (4) est présent de manière permanente, dans lequel le bord de la feuille est plié vers l'extérieur autour dudit élément (4) à l'extérieur et s'étend jusqu'au fond du récipient (1) de sorte que la feuille recouvre l'élément rigide (4) et qu'une paroi latérale à double couche est formée sur chaque bord vertical (3), et dans lequel la feuille est soudée ensemble de sorte que l'élément (4) est attaché à la feuille de fibre de verre dans une bordure en forme de boucle (5) de la feuille.

2. Récipient (1) selon la revendication 1, dans lequel la matière anti-adhérente est du polytétrafluoréthylène (PTFE).

3. Récipient (1) selon la revendication 1 ou 2, dans lequel l'élément rigide résistant à la chaleur (4) est fait de métal ou dans lequel l'élément rigide résistant à la chaleur (4) est fait d'un métal non ferreux.

4. Récipient (1) selon l'une quelconque des revendications 1 à 3, dans lequel au moins le fond du récipient est une feuille perforée ou est tissu ajouré tissé ou non tissé.

5. Récipient (1) selon l'une quelconque des revendications 1 à 3, dans lequel la feuille est imperméable à l'eau.

6. Combinaison d'un récipient (1) selon l'une quelconque des revendications 1 à 5 et d'un support externe, dans lequel le récipient (1) sert à s'attacher de manière réversible au support externe, et dans lequel le récipient est un plateau, et le support externe est un moule de cuisson ou un cadre comprenant des barres ou des plaques fournissant un support au fond et aux parois latérales du plateau.

7. Combinaison selon la revendication 6, dans lequel le plateau est attaché de manière réversible via des éléments de fixation (81) sur le plateau qui fixent de façon amovible le plateau dans le moule de cuisson via lélément, de sorte que le plateau reste dans le moule de cuisson lors de l'enlèvement de la pâte depuis cette combinaison.

8. Combinaison selon la revendication 6, dans laquelle l'élément de fixation est un rebord pliable (81) qui est attaché au côté extérieur du moule de cuisson et, lors de l'utilisation, interagit avec l'élément (4).

9. Combinaison selon la revendication 6, dans laquelle l'élément de fixation est une partie pliable du moule de cuisson qui, lors de l'utilisation, interagit avec l'élément.
